# EUROPEAN PATENT SPECIFICATION

(11) **EP 0 664 861 B1**
(45) Date of publication and mention of the grant of the patent: **14.01.1998**
(21) Application number: 94903428.4
(22) Date of filing: 13.10.1993
(51) Int. Cl.: F16K 31/06, H01F 7/16, F25B 41/06

(54) **EXPANSION VALVE FOR AIR CONDITIONING SYSTEM WITH PROPORTIONAL SOLENOID**
EXPANSIONSVENTIL FÜR EINE KLIMAANLAGE MIT EINEM PROPORTIONALMAGNET
VANNE D'EXPANSION POUR SYSTEME D'AIR CONDITIONNE AVEC SOLENOIDE PROPORTIONNEL

(30) Priority: 15.10.1992 US 961567; 07.10.1993 US 133594
(43) Date of publication of application: 02.08.1995
(60) Divisional application: 96117219.4
(73) Proprietor: PARKER HANNIFIN CORPORATION, Cleveland Ohio 44112 (US)
(72) Inventor: CAMPBELL, Chester, D., Rancho Santa Margarita, CA 92688 (US); HARPER, Sandra, L., Dana point, CA 92629 (US); JAIN, Virender, Lake Forest, CA 92630 (US); KENYON, Richard, L., Irvine, CA 92715 (US); MATTHIES, Alan, Milwaukee, WI 53216 (US); RIEFLER, Roger, G., Brandon, MI 39042 (US); YABUKI, Roy, M., Los Angeles, CA 90029 (US); ZOPEY, Ashok, Anaheim Hills, CA 92807 (US)
(74) Representative: Purvis, William Michael Cameron
(86) International application number: US9311742
(87) International publication number: WO9409300

(56) References cited:
- WO-A-94/08164
- US-A- 3 788 597
- US-A- 4 127 835
- US-A- 4 131 866
- US-A- 4 267 897
- US-A- 4 525 695
- US-A- 5 252 939

## Description

This invention relates to heat transfer systems and particularly to an expansion valve for a heat transfer system such as a vehicle air conditioning system.

Heat transfer systems, such as air conditioning systems and heat pump systems, are well known in the prior art. In such systems a working fluid which can be any one of a number of refrigerant materials is used to transfer heat from one region to another.

The working fluid typically passes through a system that includes an evaporator, a compressor, a condenser and an expansion device. Of course the system may also include other components such as an accumulator or a receiver/dryer.

In an air conditioning application the evaporator is positioned in the space to be cooled and the condenser is positioned in the area to which heat removed from the cooled space is transferred. working fluid in the vapor state is pumped by the compressor into the condenser. In the condenser the working fluid rejects heat and condenses to a liquid.

The liquid working fluid passes from the outlet of the condenser into an expansion device. Expansion devices known in the prior art include fixed orifices, capillary tubes and expansion valves.

From the expansion device the working fluid flows to the evaporator wherein it absorbs heat and undergoes a change of phase from liquid to vapor. The refrigerant vapor then flows back to the compressor to begin another pass through the system.

The expansion device is an important element of the system. The amount of working fluid that passes through the expansion device is a controlling factor in the amount of cooling that can be achieved. However, because the temperature of both the space being cooled and the space to which heat is transferred often vary, the pressure and temperature of the liquid working fluid entering the expansion device also varies. This impacts the cooling capabilities of the system and affects the flow rate that must be attained through the expansion device to achieve the optimum cooling effect. In mobile systems such as those used as air conditioning or refrigeration systems on vehicles, the properties of the working fluid delivered to the expansion device can vary widely.

Due to the variable operating conditions of vehicle heat transfer systems, fixed opening expansion devices such as orifices and capillary tubes are sometimes used to reduce cost but are not preferred. Expansion valves that provide variable refrigerant flow rates are more desirable.

Prior art expansion valves have traditionally controlled flow by passing the fluid through an internal opening in the valve and employing a movable restricting body or other element in close proximity to the opening. Moving the restricting body closer to the opening reduces flow. Conversely, moving the restricting body away from the opening increases flow through the valve.

In prior art expansion valves the position of the restricting body has been controlled by an actuator. A common actuator is a diaphragm type which is mounted on the valve. The actuator opens or closes flow through the expansion valve in response to fluid pressure both inside the valve and from a control source. The control source for fluid pressure for positioning the restricting body is delivered from a sealed bulb which holds a carefully determined fluid charge. The bulb is commonly mounted adjacent to the outlet line from the evaporator. When the temperature of the working fluid exiting the space to be cooled begins to increase, the temperature of the bulb also increases. As the pressure of the fluid inside the bulb increases it moves the diaphragm and the blocking body inside the expansion valve to increase the flow rate of working fluid to the evaporator. The increased flow of working fluid provides more cooling and eventually the temperature at the outlet of the evaporator drops. When this occurs the pressure inside the bulb falls, moving the diaphragm and the restricting body to reduce the flow rate of working fluid through the valve. The charge in the bulb is contrived to achieve a small amount of superheat in the refrigerant leaving the evaporator.

A problem with this type of prior art actuator is that the expansion device is constantly seeking the optimum rate of flow. The response time renders the expansion device unable to react promptly to changing conditions. This is particularly a problem in vehicle applications where changes in cooling loads and variations in refrigerant properties are common. As a result, the accuracy of control is also less than optimum.

Others have previously used electrically controlled expansion valves to control the flow of working fluid in a heat transfer system. These systems typically use valves that are either fully open or fully closed. The valve is periodically opened and closed for controlled time periods to achieve an overall average flow rate that is designed to handle the heat transfer load at the evaporator.

A significant problem with such pulse width modulated expansion valves is that they must open and close very frequently. This causes rapid wear of the valve components. The opening and closing action also often causes "hammering" in the system. The vibration associated with hammering may cause fatigue and premature failure of the valve and the connected tubing. It also makes accurate pressure measurement impossible.

The control elements used in prior art expansion valves for controlling or regulating the flow of working fluid also have drawbacks. The valves that meter flow must be made to deal with the static and dynamic pressure effects created by the working fluid as it passes through the valve. In some designs efforts are made to use the pressure of the working fluid to develop balancing forces. These balancing forces enable more precise movement of the restricting body or other control element. This is intended to enable more precise control of the flow rate.

The problem with attempts to design expansion valves that use such balancing forces is that the forces vary substantially with the fluid conditions and the flow rate. As a result it has been difficult to produce an expansion valve that provides accurate control of fluid flow over a wide range of operating conditions.

According to the invention there is provided an expansion valve to control flow of expanded refrigerant material into an evaporator of a heat transfer system comprising:
a body including an inlet to receive liquid refrigerant material; an outlet to deliver the expanded refrigerant material to the evaporator; and a control element to control a rate of flow of the material from the inlet to the outlet;
the body further including an opening with the control element accessible through the opening;
a variable permeance element of magnetic material in surrounding relation to the opening;
an isolation tube of nonmagnetic material extending through the opening and terminating at an outer end, the isolation tube having an interior area extending longitudinally in the isolation tube;
an actuating member positioned in the interior area of the isolation tube and longitudinally movable therein, the actuating member comprising magnetic material, being sized for acceptance in the opening and being operatively connected with the control element such that flow through the control element varies with movement of the actuating member;
biasing means to bias the actuating member toward the outer end of the isolating tube;
a sleeve member of magnetic material surrounding the isolating tube, the sleeve member including a cylindrical interior sleeve surface, and the isolation tube having a cylindrical outside isolation tube surface with said surfaces sized to fit in close adjacent relation but being disengageable whereby the coil means is detachable from the valve body;
electrical coil means in surrounding relation to the sleeve member to produce electromagnetic flux response to delivery of electrical power thereto, the electrical coil means having a first end adjacent the outer end of the isolating tube, and a second opposed end adjacent the variable permeance element;
a frame of magnetic material supporting the coil means, the frame being in connection with the sleeve and extending between the ends of the coil means; and
flux saturation means disposed longitudinally between the opening and the sleeve member to provide an area of magnetic flux saturation;
wherein electrical power delivered to the coil means moves the actuating member against the force of the biasing means and into the opening, whereby control of flow rate through the control element is achieved.

Such an expansion valve can provide accurate flow control for the working fluid under a wide range of operating and flow conditions.

The control element can minimize the influence of flow and pressure effects and the expansion valve can include a proportional solenoid actuator that accurately controls flow through the control element.

The expansion valve can minimize vibration, had a long useful life, few moving parts, be economical to manufacture, readily repaired and can be operated with flow in either direction.

The control element has a cylindrical stem member with an internal passage. The stem member has a cylindrical outer surface. The outer surface preferably includes a pair of opposed longitudinally elongate openings.

The control element further includes a movable member mounted for movement on the outside of the stem member. the movable member is movable through a range of positions between a first position wherein the valve is fully open and a second position wherein the valve is fully closed.

In a first embodiment, the control element is configured to be a normally closed element. However in other embodiments the valve may be configured to be normally open. the control element is not significantly influenced by flow or pressure forces, and is thereby enabled to provide an accurate rate of flow through selective positioning of the movable member. It also accommodates flow in either direction through the element.

The movable member of the control element is positioned by a proportional solenoid actuator. The proportional solenoid actuator is constructed with a novel low friction plunger generally as described in patent specification US-A-5,252,939.

However the proportional solenoid actuator includes a novel removable coil design that facilitates repair or replacement of the actuator. The solenoid actuator also includes a novel magnetic flux circuit that includes a low permeance, non-magnetic isolation tube in series with a variable permeance element. This construction provides a proportional solenoid that achieves accurate positioning of the movable member of the control element in response to electrical signals delivered to the proportional solenoid actuator.

Accurately positioning the control element of the valve through movement of the proportional actuator, enables accurate flow control through the expansion valve and precise control of the cooling effects of the system in which the expansion valve is used.

The invention is diagrammatically illustrated by way of example in the accompanying drawings, in which:-
Figure 1 is a cross sectional view of a first embodiment of an expansion valve according to the invention;
Figure 2 is a side view of a normally closed control element of the expansion valve shown in Figure 1;
Figure 3 is a cross sectional side view of a control element shown in Figure 2;
Figure 4 is a side view of a normally open control element of an alternative embodiment of an expansion valve according to the invention;
Figure 5 is a cross sectional view of a control element shown in Figure 4;
Figure 6 is a cross sectional view of a proportional solenoid actuator of the expansion valve shown in Figure 1; and
Figure 7 is a schematic view of a heat transfer system incorporating an expansion valve according to the invention.

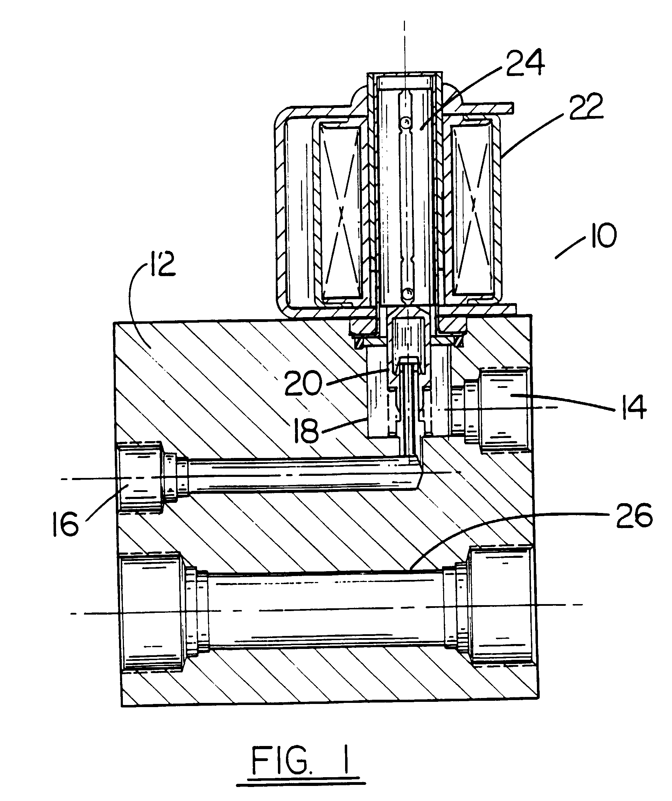

Referring now to the drawings and particularly to Figure 1, there is shown therein a first embodiment of an expansion valve according to the invention generally indicated 10. The valve has a body 12. The body 12 includes an inlet 16 for receiving liquid refrigerant working fluid. The valve also has an outlet 14 for delivering expanded working fluid to an evaporator or other exothermic heat exchanger. As later explained, the expansion valve 10 may be operated with flow in either direction, so that the inlet and outlet connections may be reversed.

The body 12 further includes a chamber 18. A control element 20 is positioned in the chamber 18. Fluid passing from the inlet 16 to the outlet 14 of the valve is required to pass through the control element 20.

The valve 10 further includes a proportional solenoid 22 which includes a movable plunger element 24 of a low friction type as described in patent specification US-A-5,252,939. As later described in detail, the plunger element 24 is controlled to move downward in response to electrical signals supplied to the proportional solenoid 22.

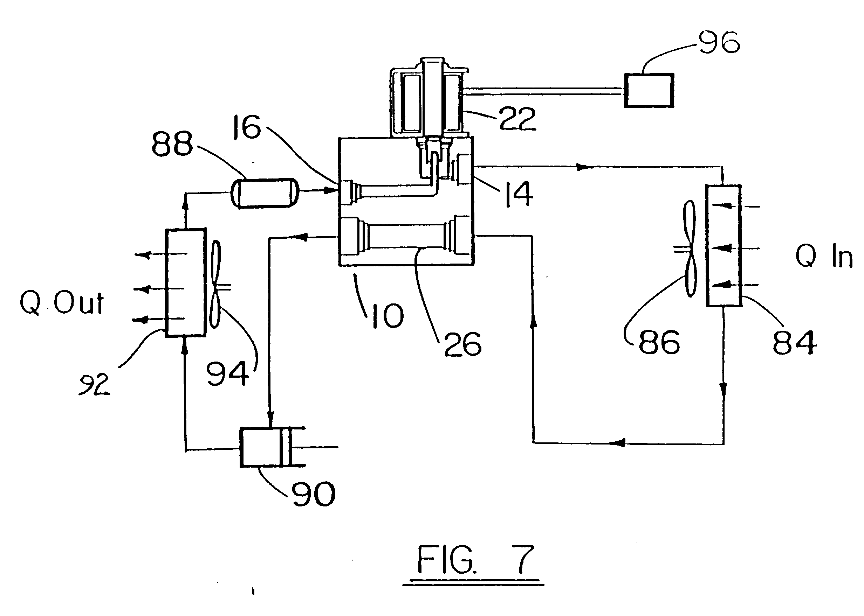

The body 12 of the valve 10 further includes a return passage 26 to provide a path for working fluid from the evaporator as it returns to the compressor and the remainder of the system (see Figure 7). The return passage 26 provides a convenient location for sensors for detecting the character and properties of the refrigerant material leaving the evaporator. However, in other embodiments of the invention the expansion valve need not include a return passage through the body 12.

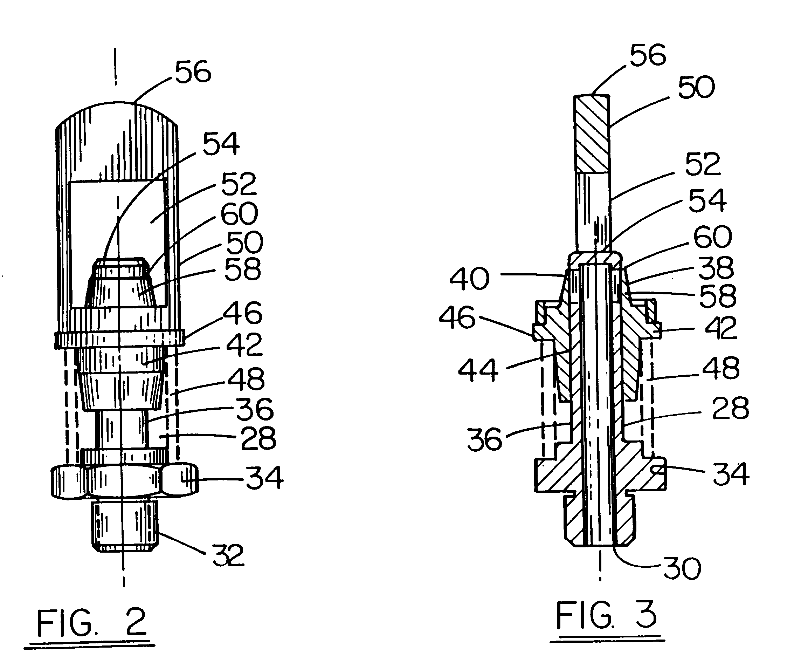

The control element 20 is shown in greater detail in Figures 2 and 3 and has a stem member 28 that includes an internal passage 30. The stem member has a threaded lower portion 32 for attaching to a similarly threaded opening in the body 12 (not separately shown) which is in fluid communication with the outlet 16. The stem member 28 also has a hex area 34 to facilitate installation and removal of the control element from the valve.

The stem member 28 includes a cylindrical outer surface 36. A pair of opposed longitudinally elongate openings 38 extend on the outer surface 36. Openings 38 are in fluid communication with the internal passage 30 through ducts 40. The ducts 40 are similarly configured to the openings 38. Control element 20 further includes a movable member 42. Movable member 42 has a cylindrical inner surface 44 that is slightly larger in diameter than outer surface 36 of stem member 28. As a result, movable member is axially movable on stem member 28.

Movable member 42 includes an enlarged flange area 46. Flange area 46 is in abutting relation at its lower side with a compression spring 48 as shown in Figures 2 and 3. Compression spring 48 biases the movable member 42 upward as viewed in the drawings.

The upper surface of flange area 46 supports a cap portion 50 of the movable member. Cap portion 50 includes a open area 52 that enables it to move downward on stem member 28 a significant distance without engaging a closed top area 54 of the stem member. Cap portion 50 also has a rounded plunger engaging portion 56. Plunger engaging portion 56 of movable member 42 engages plunger 24 as shown in Figure 1, as the movable member is biased against the plunger by spring 48.

Movable member 42 further includes tapered peripheral surface 58. Peripheral surface 58 is tapered as shown in Figures 2 and 3 such that it is relatively thin in the area of openings 38 and terminates in a sharp edge 60.

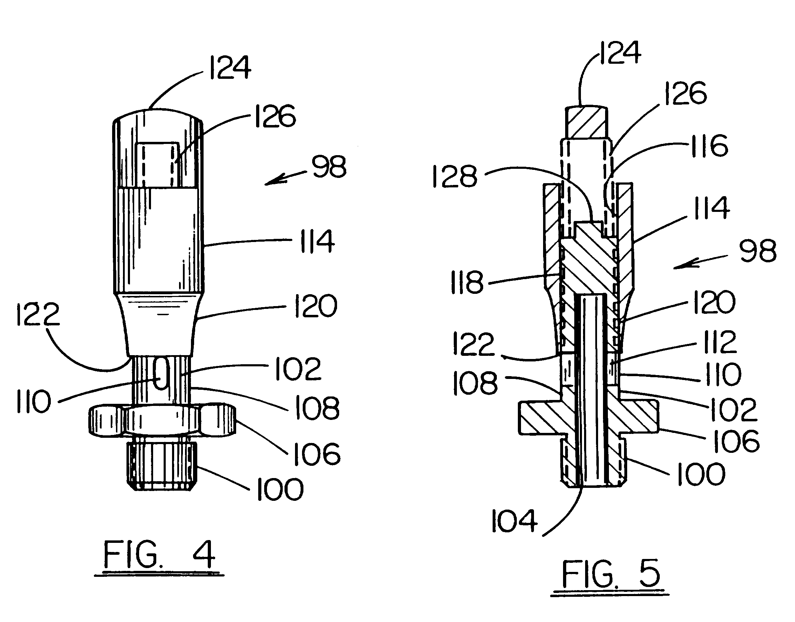

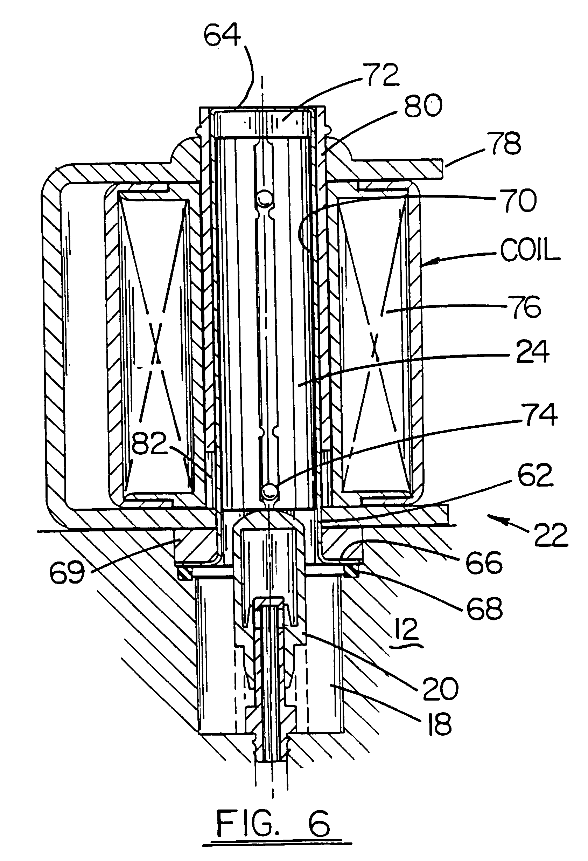

As shown in Figures 2 and 3, spring 48 biases movable member 42 upward, and the peripheral surface 58 of the movable member covers openings 38 in the outer surface of stem member 28 when no downward force is applied by the plunger of the actuator. As the control element is biased towards the position in which openings 38 are covered, it is a normally closed element. As discussed later in conjunction with the description of the embodiment of the control element shown in Figures 4 and 5, other embodiments of the expansion valve of the present invention may have normally open control elements.

When movable member 42 is moved in a direction downward as shown in Figures 2 and 3, peripheral surface 58 and edge 60 move to uncover openings 38 in stem member 28. As a result, the area outside the control element in chamber 18 is in fluid communication with internal passage 30 of the control element, and outlet 14 of the valve, through ducts 40. The extent to which openings 38 are uncovered determines the flow rate of refrigerant material through the control element, and thus the flow rate of material passing from the inlet to the outlet of the expansion valve.

The tapered peripheral portion 58 and the sharp edge 60 of the control element are important for achieving accurate flow control through the expansion valve. The sharp edge minimizes the surface area of the movable member 42 that is directly exposed to the high velocity fluid stream passing out of the openings 38 in the stem. Minimizing such surface area eliminates the tendency for the fast moving fluid to exert forces on the movable member through momentum of the moving fluid or suction forces created in accordance with Bernoulli's Principles. The thin and tapered configuration of the peripheral surface further minimizes such forces by reducing the surface exposed to the high velocity flow. By minimizing variable flow induced forces, the movable member may be stably positioned longitudinally on the outside of the stem. This is a substantial improvement over control elements which have significant surface area exposed to the high velocity flow. The larger surfaces in prior art valves are subject to being acted upon by substantial fluid momentum and velocity induced suction forces, which make the control element difficult to hold in a desired position, and thus make it difficult to accurately control flow. Further, in the preferred embodiment of the invention, forces applied by the moving fluid to the movable member are balanced out. This minimizes side loads and reduces frictional resistance to movement of the movable member on the stem. This further enables accurate flow control.

In the preferred embodiment of the invention the taper of the tapered portion is a maximum of about 15 degrees and the edge is less than about 0.0127 cm in thickness. The stem member 28 is preferably about 0.381 cm in diameter. In the preferred embodiment the movable member and stem member are made from non-magnetic stainless steel. As later explained, the non-magnetic character of the control element provides advantages in the operation of the invention. In other embodiments other non-magnetic materials such as brass, ceramics or other materials having sufficient dimensional stability and rigidity to withstand the fluid forces without deformation and which provide wear resistance, may be used.

The proportional solenoid 22 of the expansion valve is shown in greater detail in Figure 6. The proportional solenoid 22 includes an isolation tube 62. Isolation tube 62 is generally cylindrical and has a closed top 64. Isolation tube 64 also has a flanged bottom 66 which nests in a recess (not separately shown) in body 12. In the preferred form of the invention isolation tube 66 is made of non-magnetic stainless steel material having approximately 1.27 cm O.D. and a 0.0305 cm thick wall. The body 12 is preferably made of non-magnetic aluminum alloy.

A resilient seal 68 is positioned under flange bottom 66 of isolation tube 62. Seal 68 serves to provide a fluid tight seal which prevents the working fluid in chamber 18 from escaping around the isolation tube through the recess. The isolation tube is fixed in the position shown by fastening means (not shown). A flux washer 69 made of magnetic material is positioned in the recess above flange bottom 66 of the isolation tube. The preferred form of the flux washer is sized with an opening that accepts the isolation tube, has a 2.54 cm outside diameter and is 0.4572 cm thick. The purpose of flux washer 69 is later described in detail.

The isolation tube 62 has a cylindrical surface 70. Plunger 24 is movable inside an internal area 72 of the isolation tube. Internal area 72 is bounded by interior surface 70. As described in Patent Specification US-A-5,252,939, plunger 24 is comprised of magnetic material and non-magnetic rollable bodies 74 roll between the surface of plunger and the interior surface 70 of the isolation tube. Further, the isolation tube provides a radial gap in which there is no magnetic material between the plunger and the lower portion of the frame. This radial gap is approximately 0.508 cm. This construction enables plunger 24 to move with virtually no frictional resistance.

Proportional solenoid 22 further includes a wound wire coil 76 for providing an electromagnetic field when electrical power is supplied thereto. Coil 76 is supported in a frame 78 made of magnetic material that is u-shaped in cross section. A cylindrical sleeve 80 extends part way through the center of coil 76. A longitudinal gap 82 extends between the bottom of sleeve 80 and the lower portion of frame 78 as shown in Figure 6. In the preferred embodiment the length of this longitudinal gap is 0.762 cm.

The inside diameter of sleeve 80 is slightly larger than the outside diameter of isolation tube 62 and frame 78 is releasably attached to body 12 of the valve. This enables the coil and frame assembly to be removed from the valve without releasing any of the refrigerant working fluid 20 from the system. This makes it easier to repair or replace the coil of the solenoid actuator.

In operation of the expansion valve, when no electrical power is applied to coil 76, the spring 48 of control element 20 biases plunger 24 upward to the position shown in Figures 1 and 6. Supplying power to coil 76 creates an electromagnetic field. The electromagnetic field produces a flux circuit about solenoid 22. The flux circuit extends through the sleeve 80, the frame 78 and the flux washer 69. However, gap 82 causes magnetic saturation in the area of the gap.

The magnetic plunger functions as a member for completing the magnetic flux circuit. Flux washer 69 serves as a variable permeance element as its permeance varies with the distance the plunger 24 is displaced downward. As electrical power delivered to the coil of the solenoid actuator increases, the magnetic saturation at the gap 82 also increases. This causes the plunger to move downward until the force reaches an equilibrium with the biasing force of the spring of the control element.

By varying the amount of power delivered to the coil of the proportional solenoid, the position of the plunger and the movable member 42 of the control element may be precisely controlled. Because the movable member is not subject to significant flow forces as a result of fluid flowing through the valve, the rate of flow of working fluid through the valve is predictably and accurately regulated.

The proportional solenoid of the present invention is novel in that unlike conventional solenoids the force it produces does not increase exponentially as the plunger approaches the end of its stroke. This enables the solenoid actuator to achieve a force versus stroke characteristic that enables precise and repeatable movement. This in combination with the element which minimizes forces from the flowing fluid provides a valve that provides flow control accuracy that was previously unattainable in expansion valves.

Solenoid 22 is further novel in that although it is a proportional solenoid, it is removable from the body of the valve. This facilitates repair or replacement. Prior art type proportional solenoids have not generally been used in expansion valves because they could not tolerate a low permeance structure between the coil sleeve and the plunger. In the present invention however, a low permeance non-magnetic isolation tube is positioned between the magnetic sleeve and the plunger element. The presence of this low permeance tube actually enhances the ability of the plunger to move. This is believed to occur because the low permeance element maintains the plunger away from other magnetic elements and reduces resistance to movement that occurs when a magnetic element that is attracted to the plunger is immediately adjacent thereto.

It will be understood by those skilled in the art, that although the preferred embodiment of the invention uses an air gap to achieve a saturation area, in other embodiments a non-magnetic spacer or thinned area of the sleeve may be used. Likewise, although the preferred embodiment includes a flux washer as a variable permeance element, other embodiments may use other types of elements that exhibit increasing permeance with plunger stroke.

In operation of the proportional solenoid, as greater electrical power is delivered to coil 76 plunger 24 moves in a downward direction as shown in Figure 1. Because movable member 42 is engaged with plunger 24, it likewise moves downward. This opens flow through openings 38 in the outer surface of the stem member 28. As a result, working fluid on the inside of the stem member flows into chamber 18 and expands. Because openings 38 are elongate, the further the movable member moves downward the greater the flow through the control element.

The configuration of the control element enables precise control of the flow therethrough in response to the displacement of the movable member. As previously discussed, the taper of peripheral surface 58 and sharp edge 60 of the movable member reduces to a minimum the area of the movable member exposed to the fast moving fluid. Forces tending to cause side forces on the movable member which are perpendicular to its direction of motion are balanced. As a result, the effects of flow and pressure are minimized.

The non-magnetic character and configuration of the flow control element provides a further advantage in the operation of the valve. It is common for magnetic particles to flow in the working fluid in the flow circuit. Such impurities may result from contamination or deterioration of system components. Such magnetic particles can become attached to the magnetic plunger and control elements comprised of magnetic material. By making the control element non-magnetic and engaging the plunger at plunger engaging portion 56, which is far removed from the flow openings 38, such particles do not tend to collect near the openings or relatively moving parts of the control element where they could otherwise restrict flow or cause wear. This further assures accurate control of flow and increases valve life. The configuration of the movable member with the plunger engaging surface far removed from the flow openings, provides an internal space that enables more uniform expansion within the body of the valve. This further helps to achieve uniformity of flow and accurate control.

The control element provides precise and predictable flow control in response to the power delivered to the proportional solenoid. As a result, the expansion valve of the present invention may be used to achieve more accurate control of the cooling characteristics when used in an air conditioning or other heat transfer system.

A typical system in which the expansion valve 10 of the present invention may be used is shown schematically in Figure 7. Liquid working fluid enters inlet 16 of the expansion valve. The expanded refrigerant leaves the outlet 14 and is delivered in a suitable conduit to an evaporator 84. The working fluid absorbs heat as indicated by the arrows labeled Q-in, as the working fluid flows through the evaporator. Of course in the preferred form of the invention, which is an air conditioning system for a vehicle, the evaporator is in the passenger compartment or other area to be cooled. A fan 86 shown schematically draws air through the evaporator to assist in heat transfer.

working fluid exiting the evaporator travels in a suitable conduit back through return passage 26 of valve 10. As previously discussed, the return passage through the valve provides a suitable location for temperature and/or pressure sensors to detect the properties of the refrigerant vapor exiting the evaporator.

The vaporized working fluid is compressed by compressor 90 and delivered in a suitable conduit to a condenser 92. In condenser 92 the working fluid loses heat as reflected by the arrows labeled Q-out. In the condenser 92 the working fluid condenses to a liquid. A fan 94 shown schematically draws air across the condenser and aids in transferring heat from the working fluid as it passes through the condenser. In the preferred embodiment of the invention, which is an air conditioning system for a vehicle, heat is transferred from the working fluid to the environment.

From the condenser the liquefied working fluid is returned to the inlet 16 of the expansion valve, after first passing through a receiver-drier 88. Receiver-drier 88 serves to remove impurities. Such receiver-driers are well known to those skilled in the art.

The proportional solenoid 22 is actuated by an electronic control module shown schematically as 96. Control module 96 includes a processor and operates to deliver signals to the solenoid to selectively control the flow rate of refrigerant through the expansion valve. The control module is further electrically connected to sensors (not shown) which detect the characteristics of the working fluid as it leaves the evaporator, and perhaps other characteristics of the system, and operator control, which enables the control module to calculate the appropriate amount of working fluid that should optimally pass through the expansion valve and to convert this amount into a signal. Those skilled in the art may devise numerous ways of sensing the parameters desired to be used to control the flow rate through the expansion valve and for the control module 96 to properly actuate the valve to provide the desired flow.

While the preferred embodiment of the invention includes a proportional solenoid to move the control element which controls the rate of flow through the valve, in other embodiments other types of actuators may be used. Although such actuators may not provide as precise flow control as the proportional solenoid of the preferred embodiment, the novel control element of the present invention may still be successfully used.

The embodiment of the valve shown in Figure 1 includes a normally closed control element 20. However other embodiments of the invention may include control elements that are normally open. Such a normally open control element 98 is shown in Figures 4 and 5. Control element 98 is designed to be a direct replacement for control element 20, and element 98 may be substituted in expansion valve 10 without changes to the valve construction. However the actuation of the proportional solenoid by the control module would have to be changed to reflect the different character of the control element.

Control element 98 has a threaded lower portion 100 similar to threaded portion 32 of valve element 20. Also like the previously described control element, element 98 has a stem member 102 with an internal passage 104. Control element 98 also has an external hex area 106 for ease of installation and removal.

Control element 98 further includes a cylindrical outer surface 108. A pair of openings 110 in surface 108 are connected through ducts 112 to internal passage 104. Openings 110 are elongate longitudinally along the axis of the stem member as shown.

Control element 98 also includes a movable member 114. Movable member 114 has a cylindrical inner surface 116 slightly larger in diameter than outer surface 108. This enables the movable member to move longitudinally on the outside of the stem member. The stem member 102 also includes a plurality of ridges 118 in the area above openings 110 as shown in Figure 5.

Movable member 114 further includes a downwardly tapered peripheral surface 120 which terminates at sharp edge 122 adjacent its lower end. Movable member 114 further includes a plunger engaging portion 124 for engaging plunger 24. A compression spring 126 biases the movable member in the upward direction as shown in Figures 4 and 5. Stem member 102 further includes a detent 128 for helping to center spring 126 in position.

In operation of an expansion valve that includes control element 98, full flow is achieved when movable member 114 is disposed in its fully upward position. This occurs when no power is delivered to the proportional solenoid and plunger 24 is disposed fully upward as shown in Figure 1.

As electrical power to the coil of the solenoid is increased, the plunger moves downward and the movable member 114 moves similarly against the force of spring 126. As the movable member partially covers openings 110, flow through the control element is reduced. The flow is controlled by selectively moving the movable member to cover the openings to achieve the desired flow rate.

Like control element 20, control element 98 is not materially influenced by forces generated by the flow of the refrigerant therethrough. This is because the taper of peripheral surface 120 and the sharp edge 122 minimize the amount of surface area exposed to the fast moving fluid exiting from the stem. This is particularly important in the normally open configuration of the control element as fluid exiting through openings 110 will tend to have a velocity that is both upward and outward in the orientation of the control element shown in Figure 5. The taper of the peripheral surface, which is preferably a maximum of about 15 degrees, and the sharp edge 122 which is preferably less than about 0.0127 cm, minimizes the forces imparted by fluid flow. This enables accurate and repeatable flow based on the position of the movable member by the proportional solenoid. Control element 98 is also preferably comprised of stainless steel or other relatively rigid wear resistant non-magnetic material for the reasons discussed in conjunction with the normally closed control element.

A further advantage of the construction of the control elements 20 and 98 is that fluid may flow through the valve in either direction. This avoids the need to connect the valve with particular ports as the inlet and outlet. It is also useful in heat pump applications in which refrigerant flow is periodically reversed.

In the preferred construction of control elements 20 and 98, a pair of opposed fluid openings in the stem member are used. These openings are elongate to achieve control through a wide range of flow rates. The opposed nature of the openings also serves to balance the forces on the movable member of the control element which facilitates accurate control. In other embodiments of the invention, other numbers of openings and other configurations of openings may be used depending on the range of flow rates desired.

It will be understood by those skilled in the art that although the proportional solenoid 22 of the expansion valve of the present invention is adapted for use with control elements such as control elements 20 and 98, the proportional solenoid may also be used in other embodiments of the invention to control other types of flow control elements.

## Claims

1. An expansion valve to control flow of expanded refrigerant material into an evaporator (84) of a heat transfer system comprising:
a body (12) including an inlet (16) to receive liquid refrigerant material; an outlet (14) to deliver the expanded refrigerant material to the evaporator (84); and a control element (20) to control a rate of flow of the material from the inlet (16) to the outlet (14);
the body (12) further including an opening with the control element (20) accessible through the opening;
a variable permeance element (69) of magnetic material in surrounding relation to the opening;
an isolation tube (62) of nonmagnetic material extending through the opening and terminating at an outer end, the isolation tube (62) having an interior area (72) extending longitudinally in the isolation tube (62);
an actuating member (24) positioned in the interior area (72) of the isolation tube (62) and longitudinally movable therein, the actuating member (24) comprising magnetic material, being sized for acceptance in the opening and being operatively connected with the control element (20) such that flow through the control element (20) varies with movement of the actuating member (24);
biasing means to bias the actuating member (24) toward the outer end of the isolating tube (62);
a sleeve member (80) of magnetic material surrounding the isolating tube (62), the sleeve member (80) including a cylindrical interior sleeve surface, and the isolation tube (62) having a cylindrical outside isolation tube surface with said surfaces sized to fit in close adjacent relation but being disengageable whereby the coil means (76) is detachable from the valve body (12);
electrical coil means (76) in surrounding relation to the sleeve member (80) to produce electromagnetic flux response to delivery of electrical power thereto, the electrical coil means (76) having a first end adjacent the outer end of the isolating tube (62), and a second opposed end adjacent the variable permeance element (69);
a frame (78) of magnetic material supporting the coil means (76), the frame (78) being in connection with the sleeve (80) and extending between the ends of the coil means (76); and
flux saturation means disposed longitudinally between the opening and the sleeve member (80) to provide an area of magnetic flux saturation;
wherein electrical power delivered to the coil means (76) moves the actuating member (24) against the force of the biasing means and into the opening, whereby control of flow rate through the control element (20) is achieved.

2. An expansion valve according to claim 1, wherein the sleeve member (80) terminates at an annular edge surface disposed longitudinally from the opening and the flux saturation means comprises a gap (82) between the opening and the edge surface.

3. An expansion valve according to claim 1, wherein the variable permeance element (69) comprises a flux washer in surrounding relation to the isolation tube (62) and adjacent an inner end of the isolation tube (62), the inner end being opposed to the outer end.

4. An expansion valve according to claim 3, wherein the isolation tube (62) includes a flange area (66) adjacent the inner end, and wherein the valve (10) further comprises an internal chamber (18), the control element (20) being housed in the internal chamber (18), and wherein the valve (10) further comprises a resilient seal (68) intermediate of the chamber (18) and the flange area (66), whereby the seal (68) prevents escape of fluid from the chamber (18).

5. An expansion valve according to claim 4, wherein the flux washer is supported on the flange area (66) of the isolation tube (62).

6. An expansion valve according to claim 5, wherein the control element (20) includes a movable member (42) and wherein movement of the movable member (42) regulates flow through the control element (20), and wherein the movable member (42) extends adjacent the flux washer in the interior area of the isolation tube.

7. An expansion valve according to claim 3, wherein the interior area (72) of the isolation tube (62) is generally circular in cross-section and is bounded by an isolation tube interior surface (70), and wherein the actuating member (24) is generally circular in cross-section.

8. An expansion valve according to claim 7, wherein the actuating member (24) includes rollable bodies (74) extending between the actuating member (24) and the isolation tube interior surface (70), and whrein the rollable bodies (74) roll as the actuating member (24) moves.

9. An expansion valve according to claim 8, wherein the actuating member (24) includes at least three longitudinally extending slots, the slots being angularly spaced about the actuating member (24), and wherein the rollable bodies (74) extend outward from the slots to engage the isolation tube interior surface (70).

10. An expansion valve according to claim 1, wherein the flux saturation means comprises a longitudinal gap (82) between the sleeve member (80) and the variable permeance element (69).

## Patentansprüche

1. Expansionsventil zur Regelung des Stromes von expandiertem Kühlmittel in einen Verdampfer (84) eines Wärmeübertragungssystems, umfassend:
einen Körper (12) mit einem Einlaß (16) zur Aufnahme von flüssigem Kühlmittel; einem Auslaß (14) zur Abgabe des expandierten Kühlmittels an den Verdampfer (84); und einem Regler (20) zur Regelung der Strömungsgeschwindigkeit des Kühlmittels von dem Einlaß (16) zu dem Auslaß (14);
wobei der Körper (12) des weiteren eine Öffnung umfaßt, durch die der Regler (20) zugänglich ist;
ein Element (69) aus magnetischem Material von veränderlicher Permanenz, welches die Öffnung umgibt;
ein Isolierrohr (62) aus nichtmagnetischem Material, welches durch die Öffnung ragt und an einem äußeren Ende endet, wobei das Isolierrohr (62) einen Innenbereich (72) aufweist, der sich in Längsrichtung in dem Isolierrohr (62) erstreckt;
ein Betätigungselement (24), das in dem Innenbereich (72) des Isolierrohres (62) positioniert ist und in Längsrichtung darin verschieblich ist, wobei das Betätigungselement (24) aus magnetischem Material besteht, so dimensioniert ist, daß es in die Öffnung paßt, und funktional mit dem Regler (20) verbunden ist, so daß der Strom durch den Regler (20) sich entsprechend der Bewegung des Betätigungselements (24) verändert;
eine Vorspanneinrichtung, die das Betätigungselement (24) in Richtung zu dem äußeren Ende des Isolierrohres (62) vorspannt;
ein Hülsenelement (80) aus magnetischem Material, welches das Isolierrohr (62) umgibt, wobei das Hülsenelement (80) eine zylindrische Innenfläche und das Isolierrohr (62) eine zylindrische Außenfläche besitzt, und diese Flächen so dimensioniert sind, daß sie eng aneinander anliegen, aber voneinander lösbar sind, so daß die Spuleneinrichtung (76) von dem Ventilkörper (12) abnehmbar ist;
eine elektrische Spuleneinrichtung (76), die das Hülsenelement (80) umgibt, um unter der Einwirkung elektrischer Energie einen elektromagnetischen Fluß zu erzeugen, wobei die elektrische Spuleneinrichtung (76) ein erstes Ende im Bereich des äußeren Endes des Isolierrohres (62) besitzt und ein zweites entgegengesetztes Ende im Bereich des Elements (69) von veränderlicher Permanenz;
einen Rahmen (78) aus magnetischem Material, der die Spuleneinrichtung (76) trägt, wobei der Rahmen (78) mit der Hülse (80) in Verbindung steht und sich zwischen den Enden der Spuleneinrichtung (76) erstreckt; und
eine Flußsättigungseinrichtung, die in Längsrichtung zwischen der Öffnung und dem Hülsenelement (80) angeordnet ist, um einen Bereich magnetischer Flußsättigung zu schaffen;
wobei die an die Spuleneinrichtung (76) gelieferte elektrische Energie das Betätigungselement (24) gegen die Kraft der Vorspanneinrichtung und in die Öffnung hinein bewegt, so daß eine Regelung der Strömungsgeschwindigkeit durch den Regler (20) erreicht wird.

2. Expansionsventil nach Anspruch 1, bei dem das Hülsenelement (80) an einer ringförmigen Kantenfläche endet, die in Längsrichtung von der Öffnung entfernt angeordnet ist, und die Flußsättigungseinrichtung einen Spalt (82) zwischen der Öffnung und der Kantenfläche aufweist.

3. Expansionsventil nach Anspruch 1, bei dem das Element (69) von veränderlicher Permanenz eine Flußscheibe umfaßt, die das Isolierrohr (62) umgibt und im Bereich eines inneren Endes des Isolierrohres (62) angeordnet ist, wobei das innere Ende dem äußeren Ende entgegengesetzt ist.

4. Expansionsventil nach Anspruch 3, bei dem das Isolierrohr (62) einen Flanschbereich (66) im Bereich des inneren Endes umfaßt, und bei dem das Ventil (10) des weiteren eine innere Kammer (18) umfaßt, wobei der Regler (20) in der inneren Kammer (18) untergebracht ist, und bei dem das Ventil (10) des weiteren eine elastische Dichtung (68) zwischen der Kammer (18) und dem Flanschbereich (66) umfaßt, so daß die Dichtung (68) das Entweichen von Fluid aus der Kammer (18) verhindert.

5. Expansionsventil nach Anspruch 4, bei dem die Flußscheibe auf dem Flanschbereich (66) des Isolierrohres (62) aufliegt.

6. Expansionsventil nach Anspruch 5, bei dem der Regler (20) ein bewegliches Element (42) umfaßt, die Bewegung des beweglichen Elements (42) den Strom durch den Regler (20) reguliert, und das bewegliche Element (42) sich im Bereich der Flußscheibe in den Innenbereich des Isolierrohres erstreckt.

7. Expansionsventil nach Anspruch 3, bei dem der Innenbereich (72) des Isolierrohres (62) im Querschnitt im allgemeinen kreisförmig ist und von einer Innenfläche (70) des Isolierrohres begrenzt wird, und bei dem das Betätigungselement (24) im Querschnitt im allgemeinen kreisförmig ist.

8. Expansionsventil nach Anspruch 7, bei dem das Betätigungselement (24) Rollkörper (74) umfaßt, die zwischen dem Betätigungselement (24) und der Innenfläche (70) des Isolierrohres angeordnet sind, und bei dem die Rollkörper (74) rollen, wenn sich das Betätigungselement (24) bewegt.

9. Expansionsventil nach Anspruch 8, bei dem das Betätigungselement (24) wenigstens drei in Längsrichtung verlaufende Schlitze umfaßt, die im Winkel im Abstand voneinander um das Betätigungselement (24) herum angeordnet sind, und bei dem die Rollkörper (74) von den Schlitzen nach außen ragen, um in die Innenfläche (70) des Isolierrohres einzugreifen.

10. Expansionsventil nach Anspruch 1, bei dem die Flußsättigungseinrichtung einen länglichen Spalt (82) zwischen dem Hülsenelement (80) und dem Element (69) von veränderlicher Permanenz umfaßt.

## Revendications

1. Vanne d'expansion pour commander l'écoulement d'un matériau réfrigérant détendu dans un évaporateur (84) d'un système de transfert thermique, comprenant :
• un corps (12) comportant un orifice d'entrée (16) pour recevoir du matériau réfrigérant liquide ; un orifice de sortie (14) pour délivrer le matériau réfrigérant détendu à l'évaporateur (84) ; et un élément de commande (20) pour commander le débit du matériau de l'orifice d'entrée (16) vers l'orifice de sortie (14) ;
• le corps (12) comprenant en outre une ouverture à travers laquelle on peut accéder à l'élément de commande (20) ;
• un élément (69) en matériau magnétique, à perméabilité variable, entourant l'ouverture ;
• un tube d'isolation (62) en matériau non magnétique passant à travers l'ouverture et se terminant à une extrémité extérieure, ce tube d'isolation (62) ayant une zone intérieure (72) s'étendant longitudinalement dans le tube d'isolation (62) ;
• un élément d'actionnement (24) positionné dans la zone intérieure (72) du tube d'isolation (62) et pouvant se déplacer longitudinalement à l'intérieur de celle-ci, cet élément d'actionnement (24) comprenant un matériau magnétique, étant dimensionné pour être reçu dans l'ouverture et se trouvant relié en fonctionnement à l'élément de commande (20) de façon que le débit à travers l'élément de commande (20) varie avec le mouvement de l'élément d'actionnement (24) ;
• un moyen de poussée pour pousser l'élément d'actionnement (24) vers l'extrémité extérieure du tube d'isolation (62) ;
• un élément de manchon (80) en matériau magnétique entourant le tube d'isolation (62), cet élément de manchon (80) comprenant une surface de manchon intérieure cylindrique, et le tube d'isolation (62) ayant une surface de tube d'isolation extérieure cylindrique, ces surfaces étant dimensionnées pour s'adapter étroitement l'une contre l'autre mais de façon démontable, afin qu'on puisse démonter la bobine (76) du corps de vanne (12) ;
• une bobine électrique (76) entourant l'élément de manchon (80) pour produire un flux électromagnétique en réponse à l'application d'une puissance électrique à celle-ci, cette bobine électrique (76) ayant une première extrémité adjacente à l'extrémité extérieure du tube d'isolation (62), et une seconde extrémité opposée adjacente à l'élément à perméabilité variable (69) ;
• un cadre (78) en matériau magnétique supportant la bobine (76), ce cadre (78) étant en liaison avec le manchon (80) et s'étendant entre les extrémités de la bobine (76) ; et
• un moyen de saturation de flux disposé longitudinalement entre l'ouverture et l'élément de manchon (80) pour fournir une zone de saturation de flux magnétique ;
vanne d'expansion dans laquelle
la puissance électrique délivrée à la bobine (76) déplace l'élément d'actionnement (24) contre la force du moyen de poussée et de manière à l'amener en position d'ouverture, afin d'obtenir la commande du débit par l'élément de commande (20).

2. Vanne d'expansion selon la revendication 1,
dans laquelle
l'élément de manchon (80) se termine à l'endroit d'une surface de bord annulaire partant longitudinalement de l'ouverture, et le moyen de saturation de flux comprend un intervalle (82) entre l'ouverture et la surface de bord.

3. Vanne d'expansion selon la revendication 1,
dans laquelle
l'élément à perméabilité variable (69) comprend une rondelle de flux entourant le tube d'isolation (62) et adjacente à l'extrémité intérieure du tube d'isolation (62), cette extrémité intérieure étant opposée à l'extrémité extérieure.

4. Vanne d'expansion selon la revendication 3,
dans laquelle
• le tube d'isolation (62) comprend une zone de collerette (66) adjacente à l'extrémité intérieure,
• la vanne (10) comprend en outre une chambre intérieure (18), l'élément de commande (20) étant logé dans la chambre intérieure (18), et
• la vanne (10) comprend en outre un joint d'étanchéité élastique (68) placé entre la chambre (18) et la zone de collerette (66), de façon que ce joint d'étanchéité (68) empêche le fluide de s'échapper de la chambre (18).

5. Vanne d'expansion selon la revendication 4,
dans laquelle
la rondelle de flux est montée sur la zone de collerette (66) du tube d'isolation (62).

6. Vanne d'expansion selon la revendication 5,
dans laquelle
• l'élément de commande (20) comprend un élément mobile (42),
• le mouvement de l'élément mobile (42) régule le débit à travers l'élément de commande (20), et
• l'élément mobile (42) s'étend au voisinage de la rondelle de flux dans la zone intérieure du tube d'isolation.

7. Vanne d'expansion selon la revendication 3,
dans laquelle
• la zone intérieure (72) du tube d'isolation (62) présente une section transversale généralement circulaire et se trouve limitée par une surface intérieure (70) du tube d'isolation, et
• l'élément d'actionnement (24) présente une section transversale généralement circulaire.

8. Vanne d'expansion selon la revendication 7,
dans laquelle
• l'élément d'actionnement (24) comprend des corps roulables (74) s'étendant entre l'élément d'actionnement (24) et la surface intérieure (70) du tube d'isolation, et
• les corps roulables (74) roulent lorsque l'élément d'actionnement (24) se déplace.

9. Vanne d'expansion selon la revendication 8,
dans laquelle
• l'élément d'actionnement (24) comprend au moins trois fentes s'étendant longitudinalement, ces fentes étant espacées angulairement autour de l'élément d'actionnement (24), et
• les corps roulables (74) s'étendent vers l'extérieur à partir des fentes pour s'engager contre la surface intérieure (70) du tube d'isolation.

10. Vanne d'expansion selon la revendication 1,
dans laquelle
le moyen de saturation de flux comprend un intervalle longitudinal (82) entre l'élément de manchon (80) et l'élément à perméabilité variable (69).
